# EUROPEAN PATENT APPLICATION

(11) **EP 3 001 056 A2**
(43) Date of publication of application: **30.03.2016**
(21) Application number: 15173702.0
(22) Date of filing: 24.06.2015
(51) Int. Cl.: F16C 35/02, H02K 5/167

(54) **BEARING UNIT AND MOTOR**

(30) Priority: 18.08.2014 JP 2014166094
(71) Applicant: Shinano Kenshi Kabushiki Kaisha, Nagano 386-0498 (JP)
(72) Inventor: MIYASAKA, Takeshi, Ueda-shi,, Nagano 386-0498, (JP); SATO, Junki, Ueda-shi,, Nagano 386-0498, (JP)
(74) Representative: Calderbank, Thomas Roger

(57) **Abstract**

The bearing unit (1) comprises: a cylindrical bearing housing (2) composed of resin; and a metallic bearing section (6) provided in the bearing housing (2). Recessed grooves (6a) and projected stripes (2a) are formed in an inner wall surface (2b) of a cylindrical hole of the bearing housing (2) and an outer circumferential surface of the bearing section (6). The recessed grooves (6a) and the projected stripes (2a) are recession/projection-fitted to each other. Number of the recessed grooves (6a) is greater than that of the projected stripes (2a). The bearing section (6) is fitted into the bearing housing (2) in a state where the recessed grooves (6a) are aligned with the projected stripes (2a). The recessed groove (6a) not recession/projection-fitted to the projected stripe (2a) forms a space communicating to the cylindrical hole.

## Description

The present invention relates to a bearing unit capable of rotatably holding, for example, a rotor, and a motor having the bearing unit.

Conventionally, a rotor shaft of a rotor is rotatably held by a bearing, and the bearing is attached to a stator by a stator housing. The bearing is provided in a cylindrical body of the stator housing so as to rotatably hold the rotor shaft, and a stator core is attached to an outer periphery of the cylindrical body.

The stator housing is composed of a metallic material being easily cut and formed into various shapes, e.g., brass. For example, a sintered metal bearing is press-fitted in the metallic stator housing, and the stator core is fixed to the outer periphery thereof by an adhesive.

On the other hand, some stator housings are composed of resin so as to reduce production costs. To prevent a bearing from shifting, in an axial direction, with respect to the stator housing, a modified bearing structure, in which a retainer for limiting the axial shift of the bearing is provided, has been invented (see Patent Document 1).

However, in case of employing the stator housing composed of resin, strain of an inner diameter of the stator housing will easily occur when the bearing is fitted thereinto. Therefore, a following process of rotary sizing is required in some cases. After press-fitting the bearing, the retainer prohibits only the axial shift of the bearing. By heat shock, etc., cracks will be generated in the stator housing composed of resin, and holding force between the stator housing and the bearing will be weakened. Therefore, the bearing will be slightly turned, in the stator housing, by rotation of a motor, so assembling accuracy of the bearing and the stator housing must be lowered. If the bearing is fitted with play, the bearing must be easily turned and the assembling accuracy must be much lowered.

Further, air pressure difference is occurred, between inside of the bearing housing and outside thereof, by rotating a rotor in the motor. If air circulation in the motor is insufficient, grease of the bearing, for example, will be excessively heated. By the heat effect, a life span of the bearing will be shortened, and cooling efficiency of the motor will be lowered.

The present invention has been invented in view of the above described problems of the conventional technology. Accordingly, a first preferred aim of the present invention to provide a bearing unit, in which a metallic bearing section can be prohibited to turn with respect to a bearing housing composed of resin and pressure difference between inside of the bearing housing and outside thereof can be eliminated.

A second preferred aim is to provide a motor, which has the bearing unit of the present invention and whose assemblability can be improved.

Patent Document 1: Japanese Patent No. 5039491

The inventor studied and conceived the present invention. The present invention has following structures.

Namely, the bearing unit of the present invention comprises:
a cylindrical bearing housing being composed of resin; and
a metallic bearing section being provided in and integrated with the cylindrical bearing housing, the bearing section being capable of rotatably holding a rotor shaft,
a plurality of recessed grooves and a plurality of projected stripes are formed in an inner wall surface of a cylindrical hole of the bearing housing and an outer circumferential surface of the bearing section, extended in an axial direction, and arranged in an circumferential direction, the recessed grooves and the projected stripes are recession/projection-fitted to each other,
number of the recessed grooves is greater than that of the projected stripes,
the bearing section is fitted into the bearing housing from an opening part of one end of the bearing housing toward a bottom part of the other end thereof in a state where the recessed grooves are aligned with the projected stripes, and
the recessed groove not recession/projection-fitted to the projected stripe forms a space communicating to the cylindrical hole.

With the above described structure, the recessed grooves and the projected stripes, which are formed in the inner wall surface of the cylindrical hole of the bearing housing and the outer circumferential surface of the bearing section, are recession/projection-fitted to each other, and the number of the recessed grooves is greater than that of the projected stripes. Further, the recessed groove not recession/projection-fitted to the projected stripe forms the space communicating to the cylindrical hole. Therefore, the pressure difference between the inside of the bearing housing and the outside thereof can be eliminated by the space formed by the recessed groove not fitted, so that bad heat effect of the metallic bearing section can be prevented.

By employing the bearing housing composed of resin, a production cost can be reduced. Since the bearing section can be attached to the bearing housing and prohibited to turn without press fit, no strain of an inner diameter of the bearing housing occurs, so that a following process of rotary sizing is not required.

Preferably, the projected stripes, which are extended in the axial direction, are formed in the inner wall surface of the cylindrical hole of the bearing housing, and
the recessed grooves, whose number is greater than that of the projected stripes, are formed in the outer circumferential surface of the bearing section.

With this structure, the metallic bearing section can be sufficiently cooled because the recessed grooves are formed in the outer circumferential surface of the bearing section.

In the bearing unit, a recessed part, which corresponds to the recessed groove, may be radially formed in an end surface of the bearing section, which faces the bottom part.

With this structure, the rotor shaft is fitted into the bearing section, but air can be circulated, between inside of the motor and outside thereof, through the recessed part formed in the end surface of the bearing section and the recessed groove formed in the outer circumferential surface of the bearing section and communicated to the recessed part.

In the bearing unit, a projected part may be formed in the bottom part of the other end of the bearing housing, and
a gap, which is formed by butting an end surface of the bearing section fitted into the cylindrical hole from the opening part of the one end of the bearing housing against the projected part, may be communicated to the recessed groove not recession/projection-fitted to the projected stripe.

With this structure, the gap is entirely formed, between the bottom part of the other end surface of the bearing housing, except the projected part by aligning the recessed grooves with the projected stripes, fitting the bearing section into the bearing housing from the opening part of the one end and butting the end surface of the bearing section against the projected part of the bottom part of the other end of the bearing housing. Therefore, even if no recessed parts are formed in the end surface of the bearing section, air can be circulated between the inside of the motor and the outside thereof through the recessed groove which is formed in the outer circumferential surface of the bearing section and not recession/projection-fitted to the projected stripe. Further, no oil moves from the bearing section to the bearing housing, so that the oil can be prevented from scattering to the outside of bearing housing.

The motor of the present invention comprises:
the bearing unit of the present invention;
   a stator core being attached to the outer circumferential surface of the bearing housing of the bearing unit; and
   a rotor having a rotor shaft, which is rotatably held by the bearing section attached in the bearing housing.

With this structure, a production cost of the motor can be reduced, and assemblability of the motor can be improved.

By the present invention, the bearing unit, in which the metallic bearing section can be prohibited to turn with respect to the bearing housing composed of resin and pressure difference between the inside of the bearing housing and the outside thereof can be eliminated, and the motor, which has the bearing unit of the present invention and whose assemblability can be improved, can be provided.

The objects and advantages of the invention will be realized and attained by means of the elements and combinations particularly pointed out in the claims.

It is to be understood that both the foregoing general description and the following detailed description are exemplary and explanatory and are not restrictive of the invention, as claimed.

Embodiments of the present invention will now be described by way of examples and with reference to the accompanying drawings which are given by way of illustration only, and thus are not limitative of the present invention, and in which:

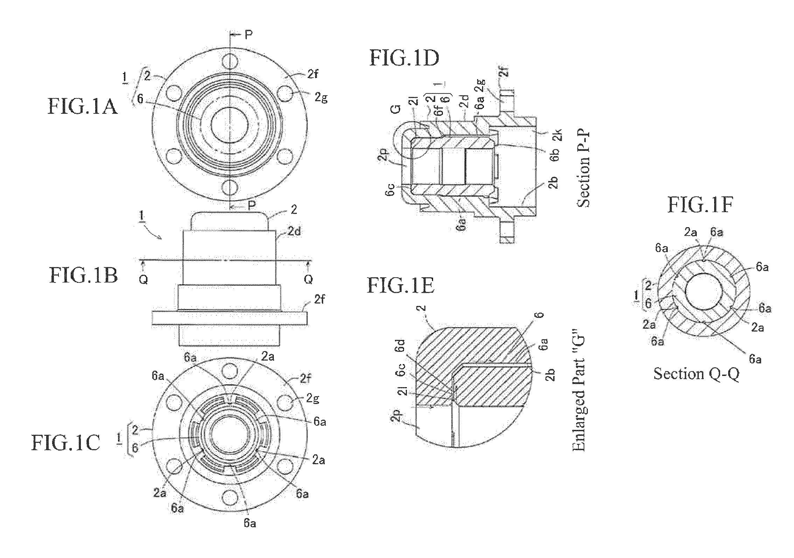

Fig. 1A is a plan view of a bearing unit of an embodiment of the present invention;
Fig. 1B is a front view of the bearing unit;
Fig. 1C is a bottom view of the bearing unit;
Fig. 1D is a sectional view of the bearing unit taken along a line P-P shown in Fig. 1A;
Fig. 1E is a partially enlarged view of a part G shown in Fig. 1D;
Fig. 1E is a sectional view of the bearing unit taken along a line Q-Q shown in Fig. 1B;
Fig. 2A includes front views of a bearing housing and a metallic bearing section disconnected therefrom;
Fig. 2B is a bottom view thereof;
Fig. 2C includes sectional views thereof;
Fig. 2D is an exploded perspective view thereof;
Fig. 3A is a plan view of a blower unit;
Fig. 3B is a sectional view of the blower unit taken along a line S-S shown in Fig. 3A;
Fig. 4A is a plan view of the bearing unit of another embodiment;
Fig. 4B is a front view of the bearing unit;
Fig. 4C is a bottom view of the bearing unit;
Fig. 4D is a sectional view of the bearing unit taken along a line A-A shown in Fig. 4A;
Fig. 4E is a sectional view of the bearing unit taken along a line B-B shown in Fig. 4B;
Fig. 4F is a partially enlarged view of a part C shown in Fig. 4D;
Fig. 5A includes front views of the bearing housing and the metallic bearing section disconnected therefrom;
Fig. 5B is an exploded perspective view thereof;
Fig. 5C is a bottom view of the bearing housing seen from a direction of an arrow D shown in Fig. 5A;
Fig. 5D is a view of another bearing housing seen from the direction of the arrow D shown in Fig. 5A;
Fig. 5E is a sectional view of the bearing unit taken along a line H-H shown in Fig. 4D;
Fig. 6A includes front views of the bearing housing and the metallic bearing section shown in Fig. 5A; and
Fig. 6B includes a sectional view of the bearing housing taken along a line F-F shown in Fig. 6A and a sectional view of the bearing section taken along a line G-G shown in Fig. 6A.

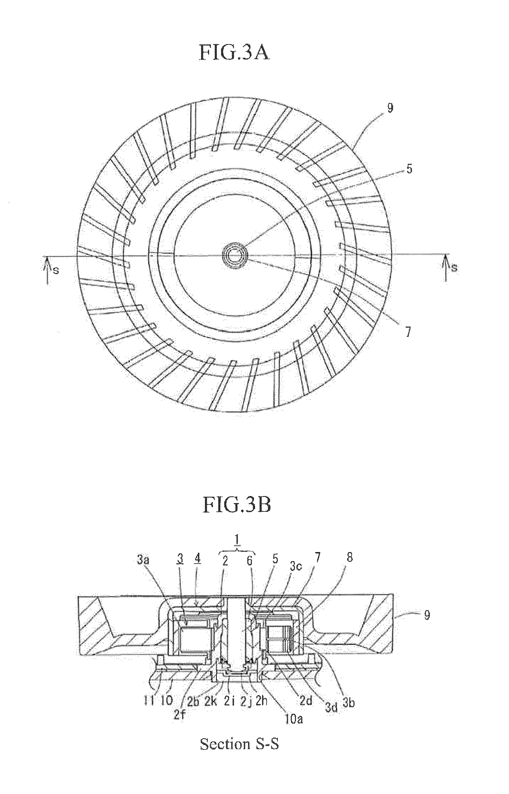

Preferred embodiments of the bearing section and the motor of the present invention will now be described in detail with reference to the accompanying drawings. Firstly, an schematic structure of a blower unit, which includes the motor of the present invention, will be explained, as an embodiment, with reference to Figs. 3A and 3B.

In Figs. 3A and 3B, a stator 3 is attached on an outer circumferential surface of a bearing housing 2 of a bearing unit 1. A rotor shaft 5 of a rotor 5 is fitted in a metallic bearing section 6, which is attached in the bearing housing 2 composed of resin, so that the rotor 4 can be rotatably held. Preferably, the resin of the bearing housing 2 has superior dimensional accuracy and can be injection-molded. For example, the resin is poly phenylene sulfide (PPS) resin. The bearing section 6 is, for example, a slide bearing (e.g., oil-impregnated sintered bearing).

As shown in Fig. 3B, a rotor yoke 7 is integrated with one end of the rotor shaft 5 by, for example, an adhesive, press fit, shrink fit, etc. The rotor yoke 7 is formed into a cup-shape having an opening part, and a ring-shaped rotor magnet 8 is fixed on an inner circumferential surface of the rotor yoke 7. An impeller 9 is fitted on and integrated with an outer surface of a top plate of the rotor yoke 7 by press fit, an adhesive, etc. The impeller 4 shown in Fig. 3A generates vortex flow in a casing (not shown) of the blower so as to blow air.

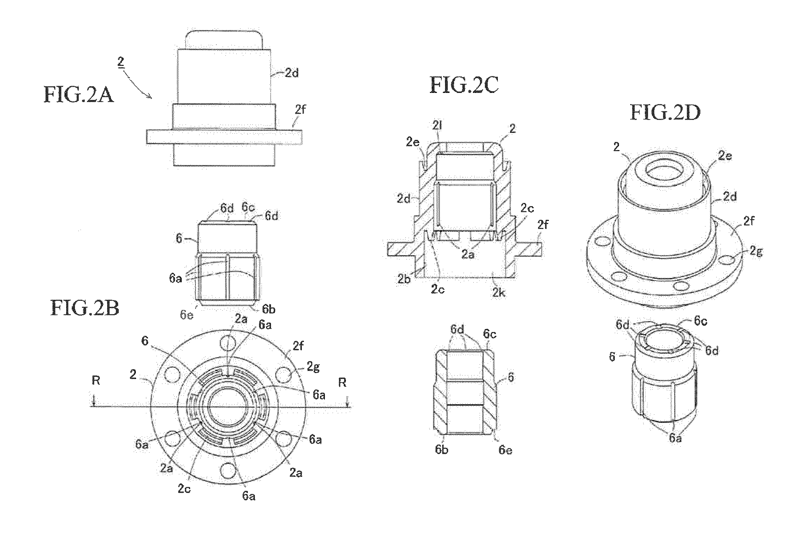

As shown in Fig. 1D, the bearing unit 1 comprises: the bearing housing 2 being formed into a cylindrical shape; and the metallic bearing section 6 being attached in a cylindrical hole of the bearing housing 2 so as to rotatably hold the rotor shaft 5. For example, the metallic bearing section 6 (e.g., oil-impregnated sintered bearing) is fitted or lightly press-fitted in the bearing housing 2 composed of PPS resin. As to an external shape of the bearing section 6, a front end part, which will be inserted into the cylindrical hole of the bearing housing 2, is a small diameter part; a rear end part is a large diameter part whose diameter is larger than that of the small diameter part. A plurality of recessed grooves (e.g., six recessed grooves) 6a are formed in an outer circumferential surface of the bearing section 6 and on the large diameter part side, and extended in an axial direction of the bearing section 6 (see Figs. 2A and 2D). Note that, the diameter of the bearing section 6 is partially different, but the diameter of the bearing section 6 may be entirely uniform. In this case, preferably, the recessed grooves 6a are continuously extended, in the outer circumferential surface of the bearing section 6, from one end to the other end.

A plurality of projected stripes (e.g., three projected stripes) 2a are formed in an inner wall surface (i.e., an inner circumferential surface) 2b of the bearing housing 2. The projected stripes 2a are extended in an axial direction of the bearing housing 2 and can be recession/projection-fitted to the recessed grooves 6a (see Fig. 2C). Number of the recessed grooves 6a formed in the outer circumferential surface of the bearing section 6 is greater than that of the projected stripes 2a of the bearing housing 2. In the present embodiment, the projected stripes 2a of the bearing housing 2 are recession/projection-fitted to every other recessed grooves 6a (see Fig. 1F). The bearing housing 2 is produced by, for example, injection resin molding, and the bearing section 6 (e.g., oil-impregnated sintered bearing) is produced by, for example, shaping dies, so that recessed shapes and projected shapes can be formed in opposite surfaces. The oil-impregnated sintered bearing may be produced by the steps of: mixing metallic materials; shaping the mixed material; sintering the shaped material; sizing the sintered bearing; and vacuum-impregnating oil into the sintered bearing, etc. The bearing section 6 is attached in the bearing housing 2 by steps of: aligning the recessed grooves 6a of the bearing section 6 with the projected stripes 2a of the bearing housing 2; inserting the bearing section 6 into the bearing housing 2 from an opening part 2k of one end of the bearing housing 2 (see Fig. 2C). Therefore, the bearing section 6 can be easily attached without being press-fitted. Further, by recession/projection-fitting the projected stripes 2a to the recessed grooves 6a, turning the bearing section 6 in the bearing housing 2 can be prevented.

As shown in Fig. 2D, a plurality of recessed parts 6d, which respectively correspond to the recessed grooves 6a, are radially formed in an end surface 6c of the bearing section 6, which faces the bottom part. In the present embodiment, six recessed parts 6d are radially formed in the end surface 6c and arranged in a circumferential direction. With this structure, even if the rotor shaft 5 is fitted into the bearing section 6, air can be circulated, between inside of the motor and outside thereof, via 2p an opening part of the other end of the bearing housing 2, the recessed parts 6d, a step-shaped part 6f in an outer periphery of the bearing section 6 (see Fig. 1D) and the recessed grooves 6a, as indicated by arrows shown in Fig. 1E. Therefore, the metallic bearing section 6 can be sufficiently cooled.

Since the number of the recessed grooves 6a is greater than that of the projected stripes 2a recession/projection-fitted to the recessed grooves 6a, the recessed grooves 6a not recession/projection-fitted to the projected stripes 2a form spaces communicating to the cylindrical hole, so that air pressure difference between inside of the bearing housing 2 and outside thereof can be eliminated by releasing air through the spaces of the recessed grooves 6a not recession/projection-fitted. Therefore, applying bad heat effect to the metallic bearing section 6 can be prevented.

Note that, the number of the recessed grooves 6a formed in the outer circumferential surface of the bearing section 6 is not limited to six, and the number of the projected stripes 2a formed in the bearing housing 2 is not limited to three. The numbers may be optionally set as far as the number of the recessed grooves 6a is greater than that of the projected stripes 2a.

As shown in Figs. 1C, 1D, 2B and 2C, a plurality of retainer projections (e.g., six retainer projections) 2c are projected from the inner wall surface 2b of the bearing housing 2 and formed on the one end side of the bearing housing 2. The retainer projections 2c are arranged in a circumferential direction. The retainer projections 2c are deformed to overlap onto one end surface 6b of the bearing section 6 by heat caulking (see Fig. 2C). With this structure, the metallic bearing section 6 can be retained in the bearing housing 2 composed of resin.

As shown in Figs. 1B and 1D, a step-shaped part 2d is formed in the outer circumferential surface of the bearing housing 2. A stator core 3a is attached to the step-shaped part 2d (see Fig. 3B). In Fig. 3B, the stator core 3a has a plurality of pole teeth 3b, which are radially formed and covered with an insulator 3c. A motor coil 3d is wound on each of the pole teeth 3b. Magnetic flux acting surfaces (i.e., outer surfaces) of the pole teeth 3b are opposed to the rotor magnet 8. Further, as shown in Figs. 1A and 1D, a circular groove 2e is circularly formed in an upper end part of the step-shaped part 2d included in the outer circumferential surface of the bearing housing 2.

As shown in Figs. 1A-1D, a flange 2f is formed in the outer periphery of the bearing housing 2. Flange holes 2g are formed in the flange 2f. As shown in Fig. 3B, the other end side of the bearing housing 2 is fitted into a through-hole 10a of a casing 10 until the flange 2f contacts the casing 10, and screws or bosses are inserted into the flange holes 2g so as to attach the blower to an external structure (not shown). A retaining washer 2h is fitted to an end part of the rotor shaft 5, which is fitted in the bearing section 6, and the shaft end is held by a thrust cover 2i, which is provided to the inner wall surface 2b of the bearing housing 2. The thrust cover 2i has a thrust receiving member 2j composed of, for example, polyether ether ketone (PEEK). A sensor 11 for detecting positions of magnetic poles of the rotor magnet 8 of the rotor 4 is provided to the casing 10.

A manner of assembling the bearing unit 1 will be explained with reference to Figs. 1A-3B. Firstly, as shown in Figs. 2A and 2D, three projected stripes 2a of the bearing housing 2 are aligned with three of the recessed grooves 6a of the bearing section 6, then the bearing section 6 is fitted into the bearing housing 2 from the opening part 2k of the one end of the bearing housing 2. Further, the bearing section 6 is further inserted, in the state where the recessed grooves 6a and the projected stripes 2a are recession/projection-fitted to each other, until the bearing section 6 contacts a bottom part 21 (see Figs. 1D and 2C), which is located on the other end side of the bearing housing 2. In Fig. 1D, the bearing section 6 is fully fitted in the bearing housing 2. The projected stripes 2a of the bearing housing 2 are recession/projection-fitted to every other recessed grooves 6a, so that the recessed grooves 6a not recession/projection-fitted to the projected stripes 2a form the spaces communicating to the cylindrical hole of the bearing housing 2 (see Fig. 1F). An air path is formed by the opening part 2k of the other end of the bearing housing 2, the recessed parts 6d formed in the end surface 6c of the other end of the bearing section 6, a space formed between the bearing section 6 and the inner wall surface 2b of the bearing housing 2 and the spaces formed by the recessed grooves 6a not recession/projection-fitted to the projected stripes 2a (see Fig. 1E).

Successively, the retainer projections 2c, which are formed in the inner wall surface 2b of the bearing housing 2 and formed on the one end side (see Fig. 2C), are deformed to overlap onto the one end surface 6b of the bearing section 6 by heat caulking and welded thereon. The heat-caulked retainer projections 2c are shown in Fig. 1D). Note that, a step-shaped part 6e (see Fig. 2C) for heat-caulking the retainer projections 2c are previously formed in the end surface 6b of the bearing section 6. With this structure, axial movement of the attached bearing section 6, with respect to the bearing housing 2, can be prevented.

In a motor of the present embodiment, the bearing unit 1 is attached to the casing 10 having the sensor 11, and then the stator 3 and the rotor 4 are sequentially assembled as shown in Fig. 3B. In the stator 3, the stator core 3a is covered with the insulator 3c, and the motor coil 3d is wound on each of the pole teeth 3b. The stator core 3a is attached to the step-shaped part 2d of the bearing housing 2. The stator core 3a may be fixed by heat-caulking and welding a part of the bearing housing 2. The rotor 4, to which the impeller 9 has been attached, is assembled by the steps of: inserting the rotor shaft 5 in a bearing hole of the bearing section 6; fitting the retaining washer 2h; and fitting the thrust cover 2i on the inner wall surface 2b of the bearing housing 2 so as to hold the shaft end of the rotor shaft 5 by the thrust receiving member 2j.

As described above, the recessed grooves 6a and the projected stripes 2a, which are extended in the axial direction of the bearing unit 1, are recession/projection-fitted to each other, and the number of the recessed grooves 6a is greater than that of the projected stripes 2a. Further, the recessed grooves 6a not recession/projection-fitted to the projected stripes 2a form the spaces communicating to the cylindrical hole of the bearing housing 2. Therefore, the air pressure difference between the inside of the bearing housing 2 and the outside thereof can be eliminated by the spaces formed by the recessed grooves 6a not recession/projection-fitted, so that applying bad heat effect to the metallic bearing section 6 can be prevented.

By employing the bearing housing 2 composed of resin, a production cost can be reduced. Since the bearing section 6 can be attached to the bearing housing 2 and prohibited to turn without press fit, no strain of the inner diameter of the bearing housing 2 occurs, so that a following process of rotary sizing is not required.

The metallic bearing section 6 can be sufficiently cooled because the recessed grooves 6a are formed in the outer circumferential surface of the bearing section 6. The rotor shaft 5 is fitted into the bearing section 6, but air can be circulated between the inside of the motor and the outside thereof through the recessed parts 6d of the bearing section 6, a space around the outer periphery of the bearing section 6 and the recessed grooves 6a thereof.

Further, the retainer projections 2c, which are formed in the inner wall surface 2b of the bearing housing 2 and on the one end side thereof, are deformed to overlap onto the end surface 6b of the bearing section 6 so as to retain the bearing section 6 in the bearing housing 2. Therefore, the metallic bearing section 6 can be efficiently attached to the bearing housing 2 without occurring deformation caused by heat or press fit.

In the motor, the stator core 3a is attached on the outer circumferential surface of the bearing housing 2 of the bearing unit 1 and retained by heat caulking. The rotor shaft 5 is fitted into the bearing section 6, which has been attached in the bearing housing 2, so that the rotor 4 can be rotatably held. Therefore, a production cost of the motor can be reduced, and assemblability of the motor can be improved.

In the above described embodiment, the projected stripes 2a are formed in the inner wall surface 2b of the bearing housing 2; the recessed grooves 6a are formed in the outer circumferential surface of the bearing section 6. The recessed grooves may be formed in the bearing housing 2, and the projected stripes may be formed in the bearing section 6.

Further, in the above described embodiment, the bearing section 6 fitted in the bearing housing 2 is an oil-impregnated sintered bearing, but other bearings, e.g., fluid dynamic bearing, pneumatic bearing, may be employed.

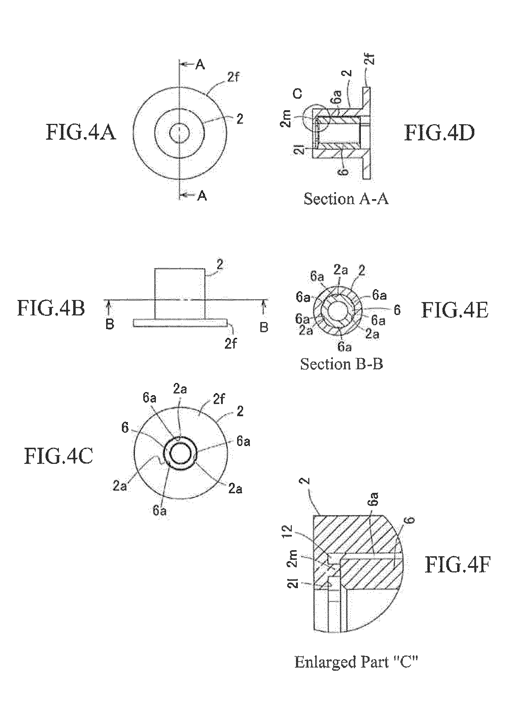

Successively, another embodiment of the bearing unit will be explained with reference to Figs. 4A-6B.

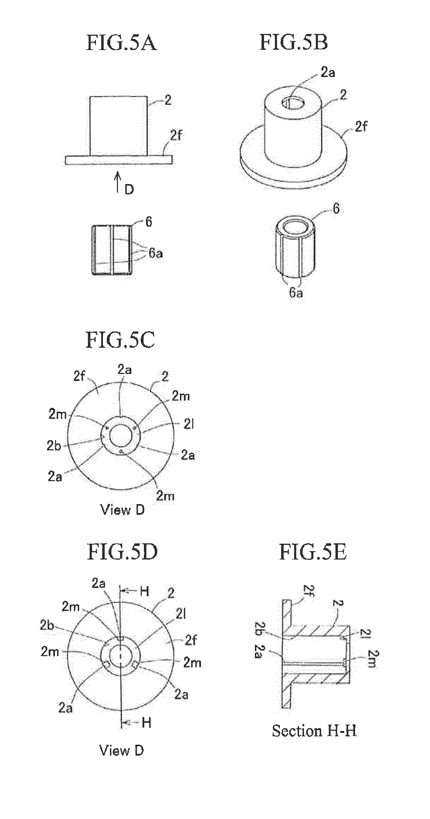

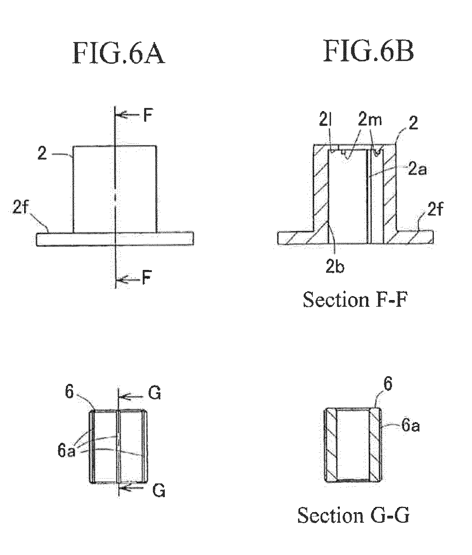

As shown in Figs. 6A and 6B, a flange 2f is formed at the one open end of the bearing housing 2, and the bottom part 21, in which a center hole is formed, is formed at the other end thereof. For example, three projected stripes 2a are formed in the inner wall surface of the bearing housing 2 at regular intervals. A plurality of projected parts (e.g., three projected parts) 2m, each of which is formed into a hemispherical shape, are formed in the bottom part 21 at regular intervals in the circumferential direction (see Fig. 5C). For example, six recessed grooves 6a are formed in the outer circumferential surface of the bearing section 6, which will be fitted into the bearing housing 2 from the opening part of the one end side, at regular intervals in the circumferential direction. Unlike the above described embodiment, the recessed parts 6d are not formed in the end surface of the bearing section 6.

As shown in Figs. 5A and 5B, the bearing section 6 is fitted into the bearing housing 2, from the opening part of the one end side, in the state where the projected stripes 2a are aligned with the recessed grooves 6a. The state of fitting the bearing section 6 in the bearing housing 2 is shown in Figs. 4A-4E. When the end surface of the bearing section 6 contacts the projected parts 2m formed in the bearing housing 2, a gap 12 is formed between the bottom part 21 and the bearing section 6 (see Fig. 4F). The gap 12 is formed around the projected parts 2m contacting the end surface of the bearing section 6.

As described above, the bearing section 6 is fitted into the bearing housing 2, in the state where the projected stripes 2a are aligned with the recessed grooves 6a, until the end surface of the bearing section 6 contacts the projected parts 2m of the bottom part 21, so that the gap 12 enclosing the projected parts 2m is formed between an inner surface of the bottom part 21 and the end surface of the bearing section 6. Therefore, even if no recessed parts 6d are formed in the end surface of the bearing section 6, air can be circulated between the inside of the motor and the outside thereof through the recessed grooves 6a which are formed in the outer circumferential surface of the bearing section 6 and not recession/projection-fitted to the projected stripe 2a, and no oil moves from the bearing section 6 to the bearing housing 2, so that the oil can be prevented from scattering to the outside of bearing housing 2, as well as the former embodiment.

Note that, each of the projected parts 2m may be formed into a rectangular parallelepiped shape as shown in Figs. 5D and 5E.

With this structure, the gap 12 is entirely formed between the bottom part 21 of the other end of the bearing housing 2 and the end surface of the bearing section 6 (between the opposite surfaces) except the projected parts 2m. Therefore, air can be circulated, between the inside of the motor and the outside thereof, through the recessed grooves 6a not recession/projection-fitted to the projected stripe 2a, etc., and no oil moves from the bearing section 6 to the bearing housing 2, so that the oil can be prevented from scattering to the outside of bearing housing 2.

In the present embodiment, the recessed parts 6d are not formed in the end surface of the bearing section 6, which contacts the bottom part 21 of the bearing housing 2. The recessed parts 6d may be formed as far as a height of the projected parts 2m is equal to or greater than a depth of the recessed parts 6d.

## Claims

1. A bearing unit (1),
comprising:
a cylindrical bearing housing (2) being composed of resin; and
a metallic bearing section (6) being provided in and integrated with the cylindrical bearing housing (2), the bearing section (6) being capable of rotatably holding a rotor shaft (5),
wherein a plurality of recessed grooves (6a) and a plurality of projected stripes (2a) are formed in an inner wall surface (2b) of a cylindrical hole of the bearing housing (2) and an outer circumferential surface of the bearing section (6a), extended in an axial direction of the bearing unit (1), and arranged in an circumferential direction, the recessed grooves (6a) and the projected stripes (2a) are recession/projection-fitted to each other,
number of the recessed grooves (6a) is greater than that of the projected stripes (2a),
the bearing section (6) is fitted into the bearing housing (2) from an opening part (2k) of one end of the bearing housing (2) toward a bottom part (21) of the other end thereof in a state where the recessed grooves (6a) are aligned with the projected stripes (2a), and
the recessed groove (6a) not recession/projection-fitted to the projected stripe (2a) forms a space communicating to the cylindrical hole.

2. The bearing unit according to claim 1,
wherein the projected stripes (2a), which are extended in the axial direction, are formed in the inner wall surface (2b) of the cylindrical hole of the bearing housing (2), and
the recessed grooves (6a), whose number is greater than that of the projected stripes (2a), are formed in the outer circumferential surface of the bearing section (6).

3. The bearing unit according to claim 1 or 2,
wherein a recessed part (6d), which corresponds to the recessed groove (6a), is radially formed in an end surface (6c) of the bearing section (6), which faces the bottom part (21).

4. The bearing unit according to claim 1 or 2,
wherein a projected part (2m) is formed in a bottom part (21) of the other end of the bearing housing (2), and
a gap (12), which is formed by butting an end surface of the bearing section (6) fitted into the cylindrical hole from the opening part (2k) of the one end of the bearing housing (2) against the projected part (2m), is communicated to the recessed groove (6a) not recession/projection-fitted to the projected stripe (2a).

5. A motor,
comprising:
the bearing unit (1) according to any one of claims 1-4;
a stator core (3a) being attached to the outer circumferential surface of the bearing housing (2) of the bearing unit (1); and
a rotor (4) having a rotor shaft (5), which is rotatably held by the bearing section (6) fitted in the bearing housing (2).
